# EUROPÄISCHE PATENTSCHRIFT

(11) **EP 0 548 320 B1**
(45) Veröffentlichungstag und Bekanntmachung des Hinweises auf die Patenterteilung: **09.04.1997**
(21) Anmeldenummer: 92914855.9
(22) Anmeldetag: 10.07.1992
(51) Int. Cl.: C22B 9/02

(54) **VERFAHREN UND VORRICHTUNG ZUR ABTRENNUNG METALLISCHER PHASEN AUS ANDEREN PHASEN**
PROCESS AND DEVICE FOR SEPARATING METALLIC PHASES FROM OTHER PHASES
PROCEDE ET DISPOSITIF DE SEPARATION DE PHASES METALLIQUES CONTENUES DANS D'AUTRES PHASES

(30) Priorität: 11.07.1991 AT 1398/91
(43) Veröffentlichungstag der Anmeldung: 30.06.1993
(73) Patentinhaber: Kos, Bernd, Dipl.-Ing., A-8700 Leoben (AT); MARHOLD, Harald, A-8700 Leoben (AT)
(72) Erfinder: Kos, Bernd, Dipl.-Ing., A-8700 Leoben (AT); MARHOLD, Harald, A-8700 Leoben (AT)
(86) Internationale Anmeldenummer: AT9200091
(87) Internationale Veröffentlichungsnummer: WO9301321

(56) Entgegenhaltungen:
- GB-A- 1 147 042
- US-A- 2 899 297
- US-A- 4 036 480
- US-A- 4 137 073

## Beschreibung

Die Erfindung betrifft ein Verfahren zur entsorgenden und/oder recyclierenden Gewinnung, Rückgewinnung und/oder Abtrennung mindestens einer metallischen Phase von mindestens einer dieselbe enthaltenden, von ihr unterschiedlichen, bei thermischer Metallgewinnung,- erzeugung, -recyclierung,- be- und/oder -verarbeitung anfallender Phase im wesentlichen anorganischer Natur sowie Vorrichtungen zur Durchführung des Verfahrens und deren Verwendung.

Bei praktisch allen Arten der Gewinnung und Aufarbeitung von Metallen bzw. Metallverbindungen, welche in vielen Fällen thermische Prozesse, wie z.B. Schmelzen, Umschmelzen, Einschmelzen, Seigern, Reduktion, Niederschlagsarbeit und dgl. umfassen, fallen Schlacken, Salzschlacken, Krätzen und ähnliche Rückstände sowie Metallabfallmaterialien an, die häufig noch beträchtliche Mengen Metall in elementarer Form enthalten. Für eine Rückgewinnung dieser Metallanteile besteht jedoch der Nachteil, daß die metallische Phase äußerst fein und oft auch unregelmäßig in der sie umgebenden oder mit ihr regelrecht " verwachsenen" Nichtmetallphase verteilt ist. So können beispielsweise in Aluminiumkrätzen bis zu 80 Masse-% Aluminium in metallischer Form vorliegen.

Die Metallgehalte in den Metallaufarbeitungs- Rückständen und dgl. stehen den immer strenger werdenden Umweltgesetzen entsprechend einer üblichen Deponierung entgegen und die Rückstände müssen mit beträchtlichem und vor allem rasch steigendem Kostenaufwand auf Sonderdeponien verbracht werden. Beim Einsatz von Flußmitteln und den dann anfallenden metallhaltigen Salzschlacken kommt zusätzlich zum Metallgehalt die Problematik der Einbringung hoher, umweltschädigender Ionen, wie insbesondere Halogenide, enthaltender Mengen wasserlöslicher Salze hinzu.

Somit tritt die, wie bisher selbstverständliche Minimierung von Metallverlusten bei den oben beschriebenen, teilweise metallurgischen Prozessen aus ökonomischen Gründen in zunehmendem Maß gegenüber dem ökologischen Bestreben zurück, durch hochgradige Abscheidung der Metalle aus den beschriebenen Rückstands - materialien eine Entlastung der Umwelt auf diesem Gebiet herbeizuführen und dadurch die in absehbarer Zeit exorbitant steigenden Folgekosten für Sonderdeponierung zu vermeiden oder zumindest weitgehend zu senken. Bei Einsatz von Salzschlacken kann nach entsprechender, in der Effektivität gesteigerter Entmetallisierung durch eine gezielte neuartige Verfahrensführung ein Recycling in Schmelz-, Umschmelz- oder Schmelzreinigungsprozessen ins Auge gefaßt werden. Damit sollte sich eine wesentliche Reduktion der sonst einer Deponie zuzuführenden Mengen an Salzen, sowie wesentliche Kosteneinsparungen im Betrieb selbst erzielen lassen.

Über die beschriebenen Probleme hinaus existiert eine Vielzahl von metallurgischen Prozessen, bei denen es z.B. gilt, mit wertvollem Metall angereicherte Phasen von weniger wertvollen Phasen oder Metalle von unerwünschten Beimengungen, z.B. Sprödphasen, zu trennen.

Alle bisher entwickelten Verfahren zur Rückgewinnung von in anderen Phasen feinverteilt vorliegenden Metallen beruhen darauf, ein Koagulieren der feinen Tröpfchen des in geschmolzenem Zustand vorliegenden Metalls zu größeren Aggregaten zu erreichen, welche dann über Poren, Risse oder Kanälchen aus dem Gemisch abfließen können oder sich im nicht mehr feindispersen Zustand aus einer Schlackenschmelze auf Grund ihrer zur Dichte der Schlacke unterschiedlichen Dichte durch Gravitationseinwirkung abscheiden.

Dazu ist es bekannt geworden, im Falle von Krätzen und im wesentlichen festen Rückständen die Benetzbarkeit der festen Phasen durch das Metall zu senken und damit ein Abfließen der geschmolzenen Phase zu fördern oder aber die Koaleszenz und Metallausbringung durch Auspressen mit Pressen mit verschiedensten Stempelformen oder Schraubenausführungen zu steigern.

Bekannt geworden ist es auch, durch Rühren die notwendige Agglomeration herbeizuführen.

Weiters wird in der US-A 4575332, deren Gegenstand an sich ein Verfahren zum Auspressen von geschmolzenem Aluminium aus heißer Krätze ist, von über den Labormaßstab nie hinausführenden, abgebrochenen Versuchen berichtet, mechanische Verfahren zur Abtrennung von Aluminium aus Krätzen wie Zentrifugieren, anzuwenden und von den Schwierigkeiten, diese Methoden in technische Dimensionen umzusetzen, wobei die Probleme als - infolge einer Blockade- dem Schlacke/Krätze- Metall-System inhärent, also im wesentlichen als unüberwindbar dargestellt werden.

Trotz dieser pessimistischen Prognose wurde eine große Zahl von Verfahren und Einrichtungen zur Trennung von Metallen aus dieselben enthaltenden Nichtmetallphasen vorgeschlagen und beschrieben, welche auf Basis von Zentrifugen mit kontinuierlicher Arbeitsweise und mit einem Austrag des abgetrennten Metalles in fließfähigem, geschmolzenem Zustand arbeiten. Die einschlägige Erfahrung auf diesem umwelttechnisch wie ökonomisch wichtigen Gebiet hat jedoch gezeigt, daß eine Anwendung der Zentrifugentechnik sich trotz der großen Zahl von Vorschlägen in Industrie und Gewerbe nicht durchgesetzt hat, derartige Anlagen auch nicht angeboten werden und somit die Prognose der oben erwähnten US-A durch die Praxis nicht widerlegt werden konnte.

Gegenstand der Erfindung ist nun ein Verfahren der eingangs beschriebenen Art, wobei die Phase im wesentlichen anorganischer Natur ist und aus der großen Gruppe der Nichtmetallphasen stammt. Das neue Verfahren ist besonders günstig zur Abtrennung von Metallen aus dieselben im metallischen Zustand enthaltenden Schlacken, Salzschlacken, Krätzen und ähnlichen Rückständen und Metallabfallmaterialien unter Nutzung von, bei über der Schmelztemperatur mindestens einer der Phasen vorliegenden Dichteunterschieden zwischen den Phasen, geeignet.

Das neue Verfahren zur entsorgenden bzw. recyclierenden Abtrennung einer metallischen Phase von mindestens einer dieselbe enthaltenden nichtmetallischen Phase aus der Gruppe der bei thermischer Metallgewinnung,- erzeugung,- bearbeitung,- verarbeitung und - recyclierung anfallenden Schlacken, Salzschlacken, Krätzen, Rückstände und Abfälle, wobei das Phasengemisch zur Entmetallisierung innerhalb eines über dem Schmelzpunkt bzw. - bereich der metallischen Phase liegenden Temperaturbereiches in einer Zentrifugiereinrichtung einer Radialbeschleunigung durch Rotation unterworfen wird, besteht im wesentlichen darin, daß das Metall-/Nichtmetall- Phasengemisch mit innerhalb des genannten Temperaturbereiches gelegener Temperatur in eine Zentrifugier-Kokille eingebracht wird oder nach Einbringung auf die genannte Temperatur gebracht wird, dort in einer 1. Verfahrensphase bei Aufrechterhaltung der Temperatur innerhalb des genannten Bereiches für eine vorgegebene Zeit der Radialbeschleunigung bis zur Erreichung eines gewünschten Entmetallisierungsgrade unterworfen wird und daß in einer 2. Verfahrensphase unter Aufrechterhaltung der Radialbeschleunigung durch Rotation zumindest die abgetrennte, aus dem Phasengemisch ausgetretene und außen peripher sich anordnende metallische Phase durch Senkung von deren Temperatur zur Verfestigung bzw. Erstarrung gebracht wird, wonach die Metallphase bei Erreichung der Manipulationstemperatur als mindestens ein im wesentlichen eine der Gestalt der Zentrifugierkokillen- Innenseite entsprechende Außenfläche und im wesentlichen drehparaboloide oder zylindrische Innenfläche aufweisender Körper ausgetragen wird.

Der Dichteunterschied zwischen einer bei oder über der Schmelztemperatur vorliegenden metallischen Phase und anderen Phasen bzw. restlichem Phasengemisch beträgt günstigerweise zumindest 0,1 t/m. Das Gemisch wird einer Rotationsbewegung mit einer Winkelgeschwindigkeit unterworfen, bei welcher jedes Volumselement des zu trennenden Phasengemisches einer Radialbeschleunigung von mindestens dem Zehnfachen der Erdbeschleungigung, also mindestens 10 "g", bevorzugt jedoch mindestens 30"g", ausgesetzt ist.

Wenn an jedem Punkt der Masse des Phasengemisches der Mindestwert der Radialbeschleunigung über einen ein Koaleszieren der feinstverteilten geschmolzenen Metall- Partikel überhaupt ermöglichenden Zeitraum- im wesentlichen im Bereich von 1 bis 20 min- bei einfacher , dem stoßweisen Anfall der Krätze im metallurgischen Betrieb angepaßter Verfahrensführung, wie sie die Erfindung ermöglicht, sichergestellt ist, lassen sich hohe Entmetallisierungsgrade erzielen. Bei diesen Bedingungen wird die Koaleszenz der Metallpartikel gefördert, jedoch ein " Wiederzer-teilen" der zu größeren Einheiten vereinigten Metallschmelze auf dem Weg durch die Poren, Kanäle, Risse, Mikrogänge und Kornzwischenräume der Krätze vermieden. Nicht nur bei Krätzen, sondern auch im Fall z.B. zähflüssiger metallhaltiger Schlacke hat sich das erfindungsgemäße, ganz gezielt diskontinuierlich geführte und vorzugsweise zwei ineinander übergehende Verfahrensphasen umfassende Verfahren ausgezeichnet bewährt. Es konnt mit dem neuen Verfahren zum ersten Mal der Schritt vom Vorschlag der Abtrennung von Metallen mittels Zentrifugen, wie er aus einer großen Zahl von Publikationen hervorgeht, in die tatsächliche ökonomisch vertretbare und ökologisch vorteilhafte, betriebliche Praxis erfolgen.

Zum Beispiel kann dabei im Fall der Aufarbeitung von Aluminium enthaltender Krätze neben dem erstarrten Metallring die etwa sandartige Konsistenz aufweisenden, metallisierten Reststoffe mit einer Art Sauger abgesaugt und der von der Innenwand der Zentrifugentrommel durch Abkühlen abgelöste, rohrartige Metallrohling mit einer entsprechenden Greifvorrichtung ausgetragen werden. Damit steht die Rotationskokille für die Entmetallisierung einer nächsten Charge von Aluminiumkrätze, beispielsweise aus einem anderen Schmelzofen als bei der vorhergehenden Charge zur Verfügung. Der ausgetragene Metallrohling kann nach mechanischer Grobreinigung, wie z.B. durch Abbürsten oder Schruppen, der anhaftenden Krätze-bzw. Schlackereste von seiner Hohlraum-Innenseite direkt in einen Umschmelzofen eingebracht werden, wobei die Form des dünnen Ringes besonders günstig für ein schnelles Einschmelzen ist. Die Reststoffe fallen im Falle von Aluminium etwa sandartig an und können mit einem umwelt- und deponiezulässig niedrigen Restmetallgehalt praktisch problemlos deponiert werden, oder aber z.B. als Rohstoff zur Aluminiumgewinnung bzw.- aufbereitung, z.B. nach dem Bayer-Verfahren, zugesetzt werden.

Wird mit Salzschlacke gearbeitet, ermöglicht das neue Verfahren eine saubere Trennung der Salze vom Oxid und vom abgeschiedenen Metall. Die Salze können problemlos wieder als Flußmittel zu einer neuen Schmelz-Charge zugesetzt werden, was einerseits zur Entlastung der Umwelt beiträgt, andererseits Kosten für neu einzusetzende Salze einzusparen hilft. Der Metallkörper braucht nicht zwingend etwa rohrförmig mit in sich geschlossener Form nach dem Abkühlen in der Kokillentrommel anzufallen: Z.B. kann bei Trommeln sechseckigen Querschnitts ( hexagonal) die Metallphase in 6 gleichen, nicht miteinander zusammenhängenden, sich im Bereich der Kanten ansammelnden Portionen ausbilden, die schließlich als sechs von ebenen Außenflächen und Innenzylinderflächen begrenzten Körper erstarren und ausgetragen werden.

Eine manipulationstechnisch geringere Anforderungen stellende Ausführungsform stellt in vorteilhafter Weise eine zwei- oder mehrstufige Chargierung gemäß Anspruch 2 dar. Dabei konnte überraschenderweise auch eine weitere Erhöhung des Entmetallisierungsgrades beobachtet werden. Besonderer Vorteil ist selbstverständlich neben der Verkürzung der Dauer des Gesamtvorganges für eine doppelte oder mehrfache Menge an aufzutrennendem Phasengemisch infolge des Wegfalles von zumindest einem Austrage- Vorgang eine Schonung der Kokilleninnenwand durch die bei Zugabe der zweiten Charge schon vorhandene, an der Innenwand anliegende und diese voll bedeckende erste Charge. Was die Reststoffe der ersten Charge betrifft, schwimmen diese auf dem sich neu bildenden Flüssigmetallring der zweiten Charge auf, also wandern sie nach innen und vereinigen sich mit den entmetallisierten Rückständen der zweiten Charge.

Bei der oben angeführten Doppel- oder Mehrfach-Chargierung kann man auch in der Weise vorgehen, wie sie von der ebenfalls manipulationstechnisch günstigen Verfahrensvariante gemäß Anspruch 3 umfaßt ist, wobei auch ein Zwischenabkühlen der ersten Charge entfällt, da das Metall in flüssigem Zustand verbleibt und so ein einziger, oft sogar weniger verunreinigter Metallkörper gebildet wird.

Wie schon oben teilweise erwähnt, ist eine Verfahrensform besonders günstig, wie sie Anspruch 4 umreißt. Die dabei erhaltenen rohrartigen Metallkörper sind mechanisch stabil, lassen sich stapeln, sind besonders rasch wieder einschmelzbar und lassen sich, wenn erwünscht, auch ohne großen Aufwand zerkleinern.

Ganz besondere Aufmerksamkeit, insbesondere im Sinne des Umweltschutzes bei gleichzeitiger Einsparung von Rohstoffen verdient eine bevorzugte Ausführungsform des erfindungsgemäßen Verfahrens gemäß Anspruch 5.

Wie einschlägige Versuche im Pilot- und Betriebsversuchen gezeigt haben, ermöglicht das Verfahren in seinen Varianten eine Rückführung von 60 bis 70 % der eingesetzten Flußmittel-, Salzmengen auf direkte Weise, so daß nur noch 30 bis 40 % des an den Oxiden oder dgl. haftenden Salzes ausgelaugt und durch Aufkonzentrierung kristallisiert zurückgewonnen werden müssen. Damit ist eine erhebliche Absenkung des Energieaufwandes für das Salz'Recycling erreichbar. Besonders bevorzugt ist es, anstelle bisher zur oben erwähnten Aufkonzentrierung verwendeter, thermischer Verfahren, wie z.B. Sprühtrockung, ein modernes Umkehrosmose- oder Elektrodialyseverfahren anzuwenden oder dieses in Kombination mit konventionellen Verfahren der Entsalzung einzusetzen.

An dieser Stelle sei nachdrücklich darauf verwiesen, daß neben den technischen Problemen, welche offenbar einer industriellen Anwendung von Zentrifugiereinrichtungen mit kontinuierlichem Betrieb- also bei Austragung des Metalles in flüssiger Form - entgegenstehen, Nachteile und Kosten von Folgeeinrichtungen für die Führung des Metalls in erhitzter Form in einen Ofen oder dgl. gegeben sind.

Das erfindunsgemäße Verfahren eröffnet mit seiner diskontinuier-lichen Arbeitsweise, bei welcher die Zentrifugentrommel gleich als Gußkokille dient, zum ersten Mal einen technisch-ökonomisch und ökologisch vorteilhaften Weg einer effektiven Anwendung von Zentrifugiereinrichtungen bei der Phasentrennung von metallhaltigen Schlacken, Krätzen und dgl.

Dem Umweltschutz besonders dienlich kann eine bevorzugte Nachbehandlung gemäß Anspruch 6 sein, bei welcher noch vorhandene Reste an Metall, also z.B. Aluminium aber auch Al-Carbid, Al-Nitrid und dgl. in unschädliches Al₂O₃ übergeführt werden.

Wie gefunden wurde, ist es für einen hohen Entmetallisierungsgrad und eine sehr effektive Trennung von Metallphase und Nichtmetallphasen von besonderem Vorteil, gemäß Anspruch 7 zu arbeiten. Dabei geht die Forderung der ansteigenden Rotationsgeschwindigkeit mit dem Anfahrvorgang der Zentrifuge konform. Es soll hier erwähnt werden, daß ein Ansteigen der Drehzahl in diskontinuierlichen Stufen, insbesondere bei bestimmten Krätze-Konsistenzen, die den Entmetallisierungsvorgang erschweren, eine Erhöhung der Entmetallisierung fördert.

Bewährte Betriebsparameter sehen beispielsweise bei Einzelchargen von etwa 0,3 t Aluminiumkrätze und einer Rotationskokille von etwa 1,5 m Durchmesser und 0,4 m Länge Anfahrzeiten von 0 auf 800 Umdrehungen pro min. im Bereich von etwa 0,5 - 2 min.,Trennzeit bei etwa 800 Umdrehungen pro min. ( Radialbeschleunigung etwa 250 "g") von etwa 5 - 20 min., insbesondere im Bereich von 15 min. vor, wobei gegen Ende der Stufe der konstanten Drehzahl schon die Erstarrung eingeleitet wird oder eintritt. Die Erstarrungsphase kann sich über die dafür nötige Zeit bei weitergeführter Rotation erstrecken, in vielen Fällen kann die endgültige Verfestigung während des Auslaufens der Zentrifuge erfolgen. Im oben angeführten, konkreten Fall wird bei Entmetallisierung einer aluminiumhaltigen Salzschlacke ein Ring aus metallischem Aluminium von etwa 2 cm Dicke ausgebildet, an den sich innenseitig ein etwa 3,5 cm dicker Ring von Aluminium-Oxid-Salz-Gemisch anschließt, was unerwartet ist, da Alumiuniumoxid eine größere Dichte als metallisches Aluminium aufweist. Nach innen schließt letztlich ein ebenfalls etwa 3.5 cm dicker Ring relativ reiner, erstarrter Salzschmelze ( z.B. KCl:NaCl in Mengen von etwa 4:6 bis 6:4) an, der nach Abtragung z.B. mittels Rundsäge, Stanze, Brechwerkzeug oder dgl. problemlos in die nächste Umschmelzcharge zurückgeführt werden kann.

Beim für eine Optimierung der Ausbringung der Metallphase günstigen Vorgehen gemäß Anspruch 8 lassen sich, gegebenenfalls durch Lösungsvorgänge, chemische Reaktionen, Modifikationsänderungen, Benetzungs-, Mitreißvorgänge oder dgl. jeweils dem Optimum nahe "Betriebsweise" des neuen Verfahrens einstellen. Es können der Metallausbringung hinderliche " Barrieren" im Krätzekörper aufgelöst werden oder es wird z.B. durch Zugabe von CaC, eine sandig- krümelige Konsistenz des Reststoffkörpers erzielt, welche dessen Austrag, aber insbesondere die Entfernung von dessen der zu gewinnenden Metallphase anhaftenden Anteilen wesentlich erleichtert. Es seien hier nun beispielsweise als Flußmittel die oben schon erwähnten Salzschmelzen genannt, die im Fall der Aluminium-Rückgewinnung besonders in Frage kommen, aber auch alkalische Zusätze in Form von Soda oder Calciumoxid oder saure Zuschläge in Form von Siliziumdioxid, welche jeweils mit SiO₂ bzw. CaO zu einer Schlackenbildung beitragen können, wie sie z.B. in der Nickel-Rückgewinnung aus dieses enthaltenden Schlacken erfolgt.

Besonders wichtig ist die Beeinflussung der Oberflächenspannung der einzelnen Phasen untereinander, die günstigerweise so einzustellen ist, daß sie einerseits die Fließfähigkeit z.B. der Metallphase erhöht, andererseits aber den Zusammenhalt der agglomerierten Metalltröpfchen fördert bzw. gewährleistet.

Bei der vorteilhaften Verfahrensweise gemäß Anspruch 9 kann eine gleichmäßige Regelung der Temperatur direkt in mindestens einer der Phasen und damit in ihrer Umgebung innerhalb der Zentrifugier-Kokille auf elegante Weise erreicht werden, wodurch eine Steigerung der Entmetallisierung erzielt wird. Mit Veränderung der Frequenz des eingespeisten Wechselstromes kann eine jeweils optimale Eindringtiefe der Induktionsströme eingestellt werden.

Weiterer wesentlicher Gegenstand der Erfindung ist eine, für die Ausbringung der gewünschten, aus einem Phasengemisch abgetrennten Metallphase in fester Form geeignete Vorrichtung, wie sie von Anspruch 10 umrissen ist. Die vorgesehene " Gesamtkonizität" des Öffungswinkels zur Austragseite hin kann zwischen 0,5 und 15 , bevorzugt etwa 5 , betragen. Sie erleichtert selbst bei Phasen, die bei Erstarren Volumserweiterung zeigen, durch eine Eigenschubkomponente des Körpers zur Austragsseite hin dessen Ausbringung wesentlich. Die Querschnitte können an sich jede symmetrische oder mehrachsig-symmetrische Form aufweisen, zum Beispiel polygonale Form. Auch etwa sternförmige Querschnitte mit Rundkanten können eingesetzt werden.

Besonders bevorzugt, weil einfache Herstellung und Manipulation sichernd , ist der gemäß Anspruch 11 vorgesehene Kreisquerschnitt, womit also im wesentlichen eine Zentrifuge mit kegelstumpfförmigem Trommel-Innenraum zum Einsatz gelangt.

Eine gemäß Anspruch 12 vorgesehene, besonders vorteilhafte Ausstattung der erfindungsgemäßen Anlage ermöglicht hohe Ausbringungsgrade und geringen Aufwand für Säuberungsarbeiten zwischen den einzelnen Chargen, der Austrag der Phasen ist ebenfalls erleichtert, ebenso wie Wartungsarbeiten im Falle austauschbarer Einsätze. Daneben wird eine Schonung der Trommel-Innenseite gegen Abrasion und chemische Veränderung und damit eine Erhöhung der Betriebszeit erreicht. Zusätzlich oder alternativ kommen auch Formtrennmittel oder Schlichten in Betracht.

Für die Auskleidung der Rotations-Kokille sind die im Anspruch 13 genannten Materialien besonders bevorzugt, wobei besonders die wenig benetzbaren Materialien Grafit und Bornitrid hervorzuheben sind.

Bei einer Ausführungsform der Zentrifugierkokille mit neigungsveränderlicher Drehachse gemäß Anspruch 14 können der Befüllungsund der Austragungs-Vorgang wesentlich erleichtert werden. Weiters kann z.B. bei aufrechter Drehachse durch Absenkung der Drehzahl ein ungestörter Übergang eines bei hoher Drehzahl praktisch rohrzylindrische, bei geringerer Drehzahl paraboloide Innenflächen aufweisenden Körpers erzielt werden.

Bei einer bezüglich der Prozeßsteuerung und der Qualität der auszubringenden Produkte besonders günstigen Ausführungsform der neuen Zentrifugierkokille gemäß Anspruch 15 kann neben dem Schutz des Gutes z.B. mittels Schutzgases bei Al- Krätze, auch eine Umwandlung einer Phase, z.B. durch eine Oxidation oder Reduktion einer Phase erfolgen. Was die Zuführung eines Kühlmediums betrifft, die für die Steuerung der 2. Verfahrensphase besonders günstig ist, so hat sich eine einfache Besprühung der Kokillentrommel mit Wasser von außen ausgezeichent bewährt, die Kühlwirkung wird durch die Verdampfung des Wassers verstärkt.

Die vorliegende Erfindung betrifft schließlich die Verwendung von Zentrifugier- Einrichtungen, wie oben beschrieben, für die in den Ansprüchen 17 und 18 angegebenen Zwecke unter Einhaltung der dort genannten Maßgaben.

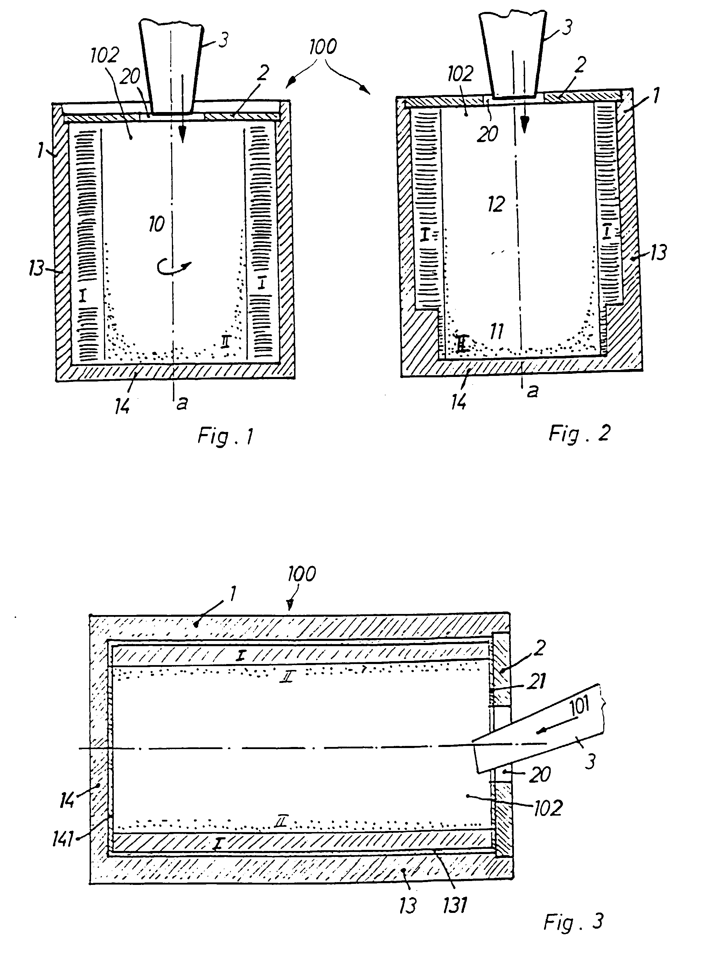

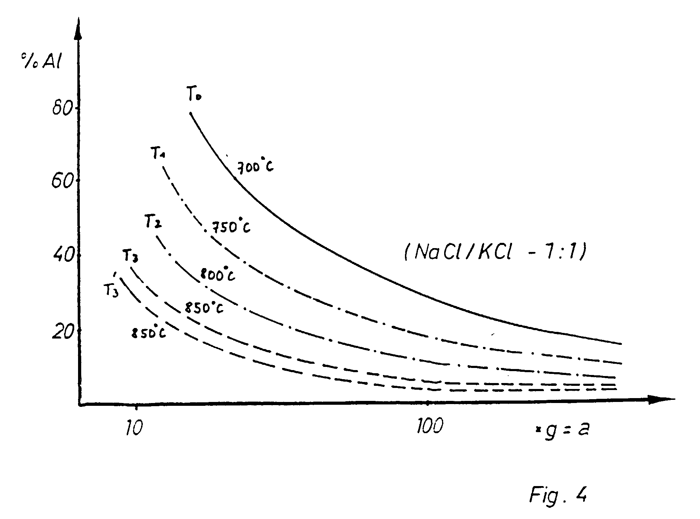

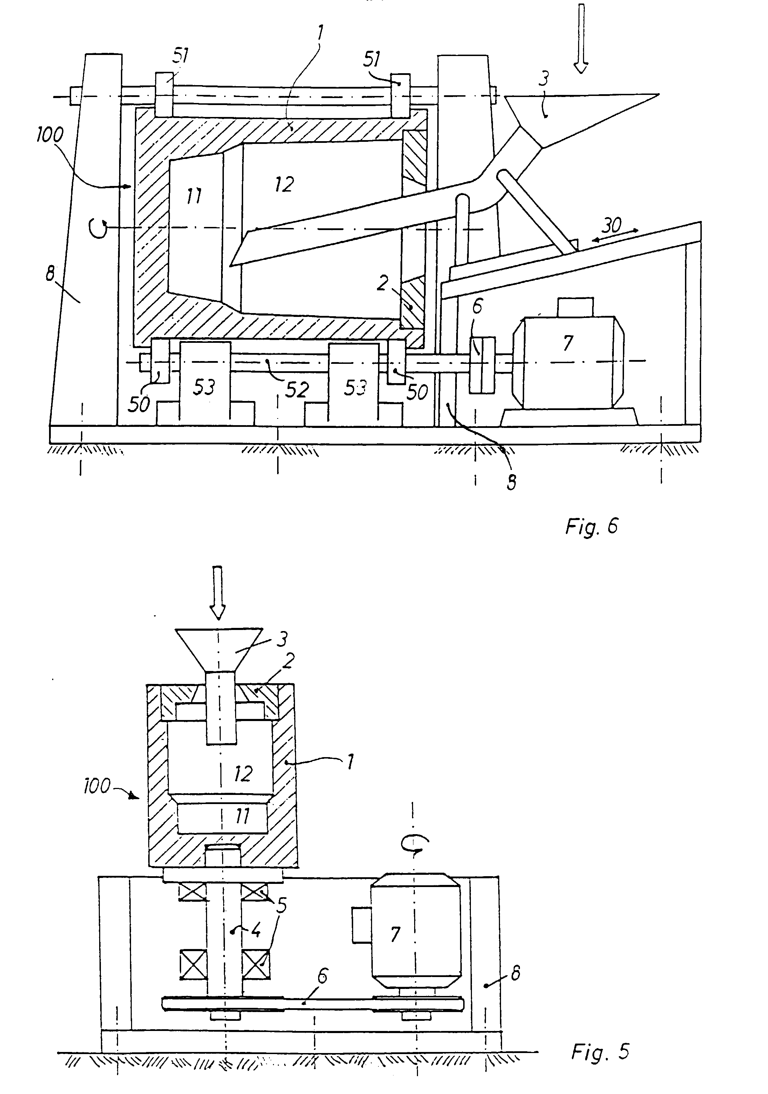

Die Erfindung wird anhand der Zeichnung näher erläutert. Es zeigen die Fig. 1, 2 und 5 schematische Schnitte durch Zentrifugenkokillen mit jeweils vertikaler Drehachse, deren erste einen einheitlichen und die andere einen abgestuften Innenraum aufweisen, Fig. 3 und 6 eine derartige Kokille mit etwa horizontaler Drehachse und Fig. 4 ein Diagramm, dem die Abhängigkeit des Entmetallisierungsgrades von Al-Krätze von der Radialbeschleunigung sowie verschiedenen Arbeitstemperaturen zu entnehmen ist.

Die Zentrifugierkokille 100 gemäß Fig. 1 mit aufrechter Drehachse a weist eine Kokillentrommel 1 auf, deren Mantel 13 mit dem Boden 14 einstückig ist. Zusammen mit dem Deckel 2 auf der Austragsseite 102 der Trommel, die bei der gezeigten Kokille mit der Eintragseite 101 identisch ist, umschließt sie einen sich konisch ganz wenig zur Austragsseite 102 hin öffnenden Innenraum 10. Über eine in die Öffnung 20 des Deckels 2 ragende Zuführung 3 kann die zu entmetallisierende heiße Krätze, Schlacke oder dgl. eingebracht werden, es wird dann zentrifugiert und nach erfolgter Abscheidung des Aluminiums aus der Krätze und dessen Erstarren noch während der Weiterrotation, wird ein rohrförmiger Aluminium-Körper I und eine sich etwa paraboloid innerhalb von diesem absetzende etwa sandartige Aluminiumkrätzemasse II erhalten, die nach Entfernung von Deckel 2 und Fülltrichter 3, eventuell nach entsprechender Verschwenkung der Achse "a" problemlos ausgetragen, z.B. ausgesaugt werden können.

Die Zentrifugierkokille 100 der Fig. 2 ist zu jener gemäß Fig. 1 analog gebaut, dementsprechend haben die die einzelnen Teile bezeichnenden Bezugszeichen mit jenen der Fig. 1 identische Bedeutung. Unterschiedlich ist nur der Innenraum 10 gestaltet, von einer Hauptkammer 12 setzt sich stufig eine Art Vorkammer 11 mit geringerem Durchmesser ab. Vorteil dieser Bauweise ist, wie in der Fig. 2 angedeutet, daß sich ein kompakterer Metallkörper I mit wenig- anhaftender Krätze II und eine Ansammlung derselben in der Vorkammer 11 erzielen läßt, wodurch die Verunreinigung des rückgewonnenen Metalls mit Krätze besonders gering gehalten werden kann.

Die Kokille 100 gemäß Fig. 5 ist jener der Fig. 2 verwandt, sie weist- bei sonst gleichen Bedeutungen der Bezugszeichen - einen schrägstufigen Übergang von der Vor-12 zur Hauptkammer 11 der Trommel 1 auf. Gezeigt sind weiters die Lagerung 5 der Kokillenwelle 4, ein Antriebsmotor 7 sowie dessen Kraftübertragung 6 und ein die genannten Elemente tragendes Gestell 8.

Es soll hier festgestellt werden, daß eine Beschränkung auf trockene Krätzen nicht beabsichtigt ist, daß also die gezeigten Rotationskokillen durchaus auch mit metallhältigen Schlacken bzw. Salzschlacken, z.B. etwa breiartiger Konsistenz beschickt werden können.

Auch bei der in Fig. 3 dargestellten, eine im wesentlichen horizontale Drehachse aufweisenden Zentrifugierkokille 100 sind analoge Teile mit schon zu Fig. 1 erläuterten Bezugszeichen versehen. Unterschiedlich ist hier allerdings, daß Zylinder 1 mit einer Mantel- und Boden-Beschichtung 131, 141,z.B. aus refraktärem Keramikmaterial versehen sind, ebenso wie der Deckel 2 mit der Schicht 21.

Bei der Kokille 100 gemäß Fig. 6 mit Horizontal-Drehachse a weist bei sonst analogen Bezugszeichen der Innenraum der Trommel 1 eine schräge Abstufung von einer Hauptkammer 12 in eine Vorkammer 11 auf. Die Trommel 1 ist auf einer Lagerung 5 mit einer in Blöcken 53 gelagerten, von einem Motor 7 über eine lösbare Kupplung 6 antreibbaren Welle 52 angeordneten Antriebsrollen 50 und am Gestell 8 gelagerten Mitlaufrollen 51 mit freier Drehachse a gelagert.

Schließlich lassen sich aus dem Diagramm der Fig. 4 für Aluminiumkrätzen mit im wesentlichen gleichen ( 70 - 80 %) Ausgangsgehalten an feinverteilten metallischen Aluminium für eine Reihe von technisch interessanten Krätzetemperaturen die bei verschiedenen Radialbeschleunigungen in der erfindungsgemäßen Zentrifugierkokille erzielbaren Restaluminiumgehalte im Oxid ablesen.

Beispiel 1: 20 kg Aluminiumkrätze aus einem Aluminium- Umschmelzofen mit einem Gehalt an metallichem Al von etwa 75 Masse- % wurden von einer Schmelze abgezogen und bei einer Temperatur von ca. 800 C in eine Zentrifugen- Trommel senkrechter Bauart gemäß Fig. 1 bzw. 2 aus Stahl mit einem Innen- Durchmesser von 400 mm und einer Innenhöhe von 500 mm eingefüllt, so daß ca. 25 % des Innenraumes gefüllt waren. Es wurde nach einer Anlaufzeit von 1,5 min. eine Drehzahl von 600 min⁻¹. für 15 min. eingehalten, so daß in der äußersten Schicht der Krätze eine Radialbeschleunigung von 80 g äugebracht wurde. Die Zentrifugierzeit bei 800 - 700 C betrug 12 min. Danach erfolgte Abkühlung mit Sprühwasser von der Außenseite der Trommel her, die Drehzahl wurde noch 3 min. lang gehalten, danach erfolgte Auslaufen. Ein geschlossener Ring metallischen Aluminiums mit einer Masse von 15 kg wurde erhalten. Es verblieben 5, kg. Al₂O₃ problemlos entsorgbarer, sandartiger Konsistenz mit einem Restgehalt an metallischem Aluminium von rund 11 Masse- %.

Beispiel 2: Es wurde, wie im Beispiel 1 beschrieben, verfahren, mit dem Unterschied, daß die Al-Krätze einer Radialbeschleunigung von 160 "g" unterworfen wurde. Das Resultat war ein geschlossener Ring metallischen Aluminiums mit einer Masse von 15,5 kg und es verblieben rund 3,8 kg Al₂O₃ sandartiger Konsistenz mit etwa 6 Masse-% Restgehalt an metallischem Aluminium.

Beispiel 3: Es wurde, wie im Beispiel 1 beschrieben,vorgegangen, allerdings wurde eine Zentrifuge gemäß dem Prinzip der Fig. 2,4 bzw. 5 verwendet, deren Innenraum bei 450 mm Innendurchmesser einen unteren Teil mit abgestuftem kleineren Innendurchmesser von 350 mm und einer Innenhöhe von 200 mm bei einer Gesamtinnenhöhe von 500 mm aufwies und als Vorkammer wirkte. Die auf die Krätze ausgeübte Radialbeschleunigung betrug 160 "g". Erhalten wurde ein 15.7 kg Masse aufweisender, geschlossener Ring metallischen Aluminims, welcher von Oxideinschlüssen praktisch frei war. Die Reststoffe hatten einen Rest-Al-Gehalt von 7 Masse-%.

Beispiel 4: Es wurde prinzipiell, wie in Beispiel 1 beschrieben, vorgegangen, wobei die Wand der Kokillentrommel ( 1 Wandneigung, Durchmesser 1500 mm, Höhe 400 mm, ohne Innenraumstufe, Auskleidung Gußeisen) von außen durch Induktionsspulen beheizt wurde, so daß die Kokille eine Temperatur von 680 C aufwies. Eingebracht wurde eine aluminiumhältige Salzschlacke aus einer Aluminiumschmelzanlage mit 9 Masse-% Al. Die Radialbeschleunigung betrug 20 "g", Dauer : 15 min., bei 680 C. Danach erfolgte die Abkühlung durch Sprühwasser bei Weiterrotation mit 220 "g" für 3 min. und schließlich erfolgte Auslaufen und Bremsen der Rotationskokille.

Es wurde ein von der Zentrifugenwand glatt gelöster Ring aus Aluminium ( 220 kg. Ringdicke 2,2 cm) erhalten, dem zur Ringmitte hin ein Ring mit etwa 80 % Al₂O₃ in einer KCl-NaCl ( 1:1) Matrix und einer Ringstärke von 3,8 cm folgt und innerhalb dessen mit scharfer Grenze ein " Reinsalz"- Ring ( KCl, NaCl) mit 4,0 cm Dicke vorlag. Der innere Salzring konnte mechanisch vom Al O -Ring getrennt werden und wurde einer Altaluminiumschmelze als Salzschlackenbildner zugesetzt.

Nach Abtragung der erstarrten Oxid-Salzsuspension vom Metallring wurde dieselbe mit Wasser gelaugt, das unlösliche, noch feuchte Al₂O₃ wurde in eine Bauxitaufschlußanlage rückgeführt, und aus der erhaltenen Salzlake wurde durch Sprühtrocknen das Salz kristallisiert, das wieder as Flußmittel zur Bereitung der Salzschlacke eingesetzt werden konnte.

Der erhaltene Aluminiumring wurde in einem Umschmelzofen mit der dortigen Schmelze vereinigt.

Der Restgehalt von Al in der Salzschlacke insgesamt betrug 0,3 Masse-%.

Die Vorteile der Erfindung sollen hier noch kurz zusammengefaßt werden und zwar beispielhaft anhand der Aufarbeitung von Aluminium-metall enthaltenden Schlacken.

60 bis 70 % des in der Salzschlacke vorhandenen Salzes können mechanisch wiedergewonnen werden, bedürfen also keiner Laugung mit Wasser und energieintensiver Verdampfung des Wassers; das bedeutet etwa 60 - 70 % Energieeinsparung bei der Salzrückgewinnung gegenüber bisher bekannten Verfahren.

Auf Grund der Dichteunterschiede werden praktisch alle vom Aluminiumschmelzen stammenden Verunreinigungen, wie Carbid, Fluorid, Oxid und Nitrid des Aluminiums vom Salz bzw. Salzgemisch getrennt.

Rest-Aluminium, aber auch Aluminiumcarbid und- nitrid können durch Nachverbrennung in unschädliche Al-Verbindungen übergeführt werden und sind voll deponiefähig.

Die Begleitstoffe reichern sich in der Krätze bzw. Schlacke an und infolge ihrer hohen Konzentration ist der Energiebedarf für die " Nachverbrennung" der Krätze bzw. Schlacke gering.

## Patentansprüche

1. Verfahren zur entsorgenden bzw. recyclierenden Abtrennung einer metallischen Phase von mindestens einer dieselbe enthaltenden nichtmetallische Phase aus der Gruppe der bei thermischer Metallgewinnung, - erzeugung, - bearbeitung, - verarbeitung und - recyclierung anfallenden Schlacken, Salzschlacken, Krätzen, Rückstände und Abfälle, wobei das Phasengemisch zur Entmetallisierung innerhalb eines über dem Schmelzpunkt bzw.- bereich der metallischen Phase liegenden Temperaturbereiches in einer Zentrifugiereinrichtung einer Radialbeschleunigung durch Rotation unterworfen wird, dadurch gekennzeichnet, daß- bei chargenweiser Betriebsführung- das Metall-/Nichtmetall-Phasengemisch mit innerhalb des genannten Temperaturbereiches gelegener Temperatur in eine Zentrifugier-Kokille eingebracht wird oder nach Einbringung auf die genannte Temperatur gebracht wird, dort in einer 1. Verfahrensphase bei Aufrechterhaltung der Temperatur innerhalb des genannten Bereiches für eine vorgegebene Zeit der Radialbeschleunigung bis zur Erreichung eines gewünschten Entmetallisierungsgrades unterworfen wird und daß in einer 2. Verfahrensphase unter Aufrechterhaltung der Radialbeschleunigung durch Rotation zumindest die abgetrennte, aus dem Phasengemisch ausgetretene und außen peripher sich anordnende metallische Phase durch Senkung von deren Temperatur zur Verfestigung bzw. Erstarrung gebracht wird, wonach die Metallphase bei Erreichung der Manipulationstemperatur als mindestens ein im wesentlichen eine der Gestalt der Zentrifugierkokillen- Innenseite entsprechende Außenfläche und im wesentlichen drehparaboloide oder zylindrische Innenfläche aufweisender Körper ausgetragen wird.

2. Verfahren nach Anspruch 1, dadurch gekennzeichnet, daß mit einer ersten Charge der in Anspruch 1 beschriebene Vorgang bis zur Verfestigung bzw. Erstarrung der außen peripher sich anordnenden Metall-Phase geführt wird und daß bei fortgesetzter Rotation zumindest eine zweite Charge des Phasengemisches mit einer für die 1. Verfahrensphase vorgesehenen Temperatur in die Zentrifugier-Kokille eingebracht, daß innerhalb des über dem Schmelzpunkt der Metall-Phase liegenden Temperaturbereiches der Radialbeschleunigung durch Rotation unterworfen wird, wonach durch Temperatursenkung zumindest der sich innerhalb der verfestigten 1. Charge anordnende, an sie angrenzende Metallkörper zur Verfestigung bzw. Erstarrung gebracht wird, und schließlich der gebildeten, zumindest mit zwei Schichten ausgebildete Metall-Phasen Körper ausgetragen wird.

3. Verfahren nach Anspruch 1, dadurch gekennzeichnet, daß eine erste Charge des Phasengemisches der 1. Verfahrensphase unterworfen wird und daß bei fortgesetzter Rotation zumindest eine zweite Charge des Phasengemisches mit einer für die 1. Verfahrensphase vorgesehenen Temperatur in die Zentrifugier-Kokille eingebracht, dort innerhalb eines über dem Schmelzpunkt der Metallphase liegenden Temperaturbereiches der Radialbeschleunigung durch Rotation unterworfen wird, wonach Erstarrung bzw. Verfestigung des einstückig ausgebildeten Metall-Körpers und schließlich dessen Ausbringung erfolgt.

4. Verfahren nach einem der Ansprüche 1 bis 3, dadurch gekennzeichnet, daß eine zu entmetallisierende Schlacke, Salzschlacke oder Krätze aus der Metall-Gewinnung,- Produktion oder- Recyclierung mit einem Metallgehalt aus der Gruppe Aluminium und Aluminiumlegierungen eingesetzt wird und ein im wesentlichen rohrartiger Metallkörper ausgetragen wird.

5. Verfahren nach einem der Ansprüche 1 bis 4, dadurch gekennzeichnet, daß der dem Metallkörper nicht anhaftende Anteil an entmetallisierter nichtmetallischer Phase ebenfalls ausgetragen und dem Metallkörper anhaftende Anteile derselben von demselben mechanisch getrennt werden, wobei im Falle des Einsatzes von Flußmitteln bzw. Salzen dieselben als Flußmittelquelle zu neuen Umschmelz-Chargen recycliert werden.

6. Verfahren nach einem der Ansprüche 1 bis 5, dadurch gekennzeichnet, daß die nach der Zentrifugierbehandlung erhaltenen Reststoffe zur Überführung darin verbliebener Metallreste und schädlicher Metallverbindungen bei erhöhten Temperaturen einer Nachoxidation bzw. Nachverbrennung mit Luft unterworfen werden.

7. Verfahren nach einem der Ansprüche 1 bis 6, dadurch gekennzeichnet, daß das zu trennende Phasengemisch in der Verfahrensphase mit in einer 1. Stufe ansteigender und in einer 2.Stufe mit längerer Dauer mit im wesentlichen konstanter Radialbeschleunigung beaufschlagt wird.

8. Verfahren nach einem der Ansprüche 1 bis 7, dadurch gekennzeichnet, daß dem aufzutrennendem Phasengemisch vor oder während der 1. Verfahrensphase Mittel zur Beeinflussung mindestens einer der physikalischen Eigenschaften zumindest einer der Phasen aus der Gruppe Konsistenz, Viskosität, Schmelzbereich, Thixotropie und Oberflächenspannung zugesetzt bzw. zugemischt werden.

9. Verfahren nach einem der Ansprüche 1 bis 8, dadurch gekennzeichnet, daß im aufzutrennenden Phasengemisch vor und/oder während der 1. Verfahrensphase die Temperatur der Metallphase mittels induktiver Energiezufuhr eingestellt, gehalten bzw. gesteuert wird.

10. Vorrichtung zur Durchführung des Verfahrens gemäß einem der Ansprüche 1 bis 9, gekennzeichnet durch mindestens eine, gegebenenfalls wechselbare, in einem Gehäuse oder Gestell (8) angeordnete, mittels regelbaren Antriebs ( 6,7) in Rotationsbewegung gewünschter Drehzahl versetzbare, mit konventioneller oder induktiver Heizeinrichtung ausgestatteter Zentrifugier-Kokillen-Trommel (1) mit quer zur Drehachse (a) mehrachsig bzw. mehrstrahlig symmetrischen Querschnitt oder Kreisquerschnitt aufweisendem, mit dem Phasengemisch beaufschlagbarem Innenraum (10,11,12), wobei die Querschnittsfläche zur Austragsseite ( 102) hin sich vergrößernd bzw. erweiternd ausgebildet ist.

11. Vorrichtung nach Anspruch 10, dadurch gekennzeichnet, daß das der Querschnitt des Innenraumes ( 10,11,12) der ZentrifugierKokillen- Trommel (1) bei geometrischer Ähnlichkeit zur Austragsseite ( 102) hin kontinuierlich sich vergrößernd ausgebildet ist.

12. Vorrichtung nach einem der Ansprüche 1 bis 11, dadurch gekennzeichnet, daß zumindest die Oberflächen der mit dem zu trennenden Phasengemisch in Berührung kommenden Teile der Zentrifugier- Kokille ( 100) bzw. deren Trommel (1) mit einem von den einzelnen Phasen bei der Phasen- Trenntemperatur im wesentlichen nicht benetzbaren und/oder mit denselben nicht reagierenden Werkstoffen in Form einer Beschichtung ( 131, 141, 21) oder austauschbarer Einsätze, gebildet sind.

13. Vorrichtung nach Anspruch 12, dadurch gekennzeichnet, daß die dort genannten Teile der Zentrifugier-Kokille ( 100) bzw. von deren Trommel (1) mit Gußeisen, Stahl, Grafit oder einem hitzebeständigen Oxid, Carbid, Nitrid, Silicid oder Borid mindestens eines der Elemente aus der Gruppe Mg, B, Al, Si und der Metalle der 4. bis 6. Nebengruppe des Periodensystems gebildet sind, wobei Cermet-Material, Bornitrid, Silicium-Carbid, Aluminiumoxid oder Magnesiumoxid besonders geeignet sind.

14. Vorrichtung nach einem der Ansprüche 9 bis 13, dadurch gekennzeichnet, daß die Zentrifugier-Kokille ( 100) bzw. deren Trommel (1) mit neigungsveränderlicher Drehachse (a) ausgebildet ist.

15. Vorrichtung nach einem der Ansprüche 9 bis 14, dadurch gekennzeichnet, daß die Zentrifugier-Kokille (100) Einrichtungen zur Zuführung eines Kühlmediums und/oder eines Spül- bzw. Schutzgases zur bzw. auf die Trommel (1) bzw. in deren Innenraum (10) aufweist.

16. Vorrichtung nach einem der Ansprüche 9 bis 15, dadurch gekennzeichnet, daß der Innenraum ( 10,11,12) der ZentrifugierKokillen- Trommel (1) mit einer kleineren Querschnitt aufweisenden Vorkammer (11), die in Richtung zur Austragsseite hin eine stufig von derselben abgesetzte, integral anschließende, größeren Querschnitt aufweisende Hauptkammer (12) übergeht, ausgebildet ist.

17. Verwendung einer Zentrifugier- Einrichtung, insbesondere nach einem der Ansprüche 10 bis 16, zur entsorgenden bzw. recyclierenden Abtrennung einer metallischen Phase von mindestens einer dieselbe enthaltenden nichtmetallischen Phase aus der Gruppe der bei thermischer Metallgewinnung,- erzeugung,- bearbeitung,- verarbeitung und - recyclierung anfallenden Schlacken, Salzschlacken, Krätzen, Rückstände und Abfälle mit der Maßgabe, daß das Metall-/Nichtmetall- Phasengemisch mit innerhalb des genannten Temperaturbereiches gelegener Temperatur in eine Zentrifugier-Kokille eingebracht wird oder nach Einbringung auf die genannte Temperatur gebracht wird, dort in einer Verfahrensphase bei Aufrechterhaltung der Temperatur innerhalb des genannten Bereiches für eine vorgegebene Zeit der Radialbeschleunigung bis zur Erreichung eines gewünschten Entmetallisierungsgrades unterworfen wird und daß in einer 2. Verfahrensphase unter Aufrechterhaltung der Radialbeschleunigung durch Rotation zumindest die abgetrennte, aus dem Phasengemisch ausgetretene und außen peripher sich anordnende metallische Phase durch Senkung von deren Temperatur zur Verfestigung bzw. Erstarrung gebracht wird, wonach die Metallphase bei Erreichung der Manipulationstemperatur als mindestens ein im wesentlichen eine der Gestalt der Zentrifugierkokillen- Innenseite entsprechende Außenfläche und im wesentlichen drehparaboloide oder zylindrische Innenfläche aufweisender Körper ausgetragen wird.

18. Verwendung einer Zentrifugiereinrichtung nach einem der Ansprüche 10 bis 16 für den im Anspruch 17 genannten Zweck, mit der Maßgabe, daß Aluminium bzw. eine Aluminium-Legierung aus das- bzw. dieselbe enthaltenden Krätzen oder Schlacken nach einem Verfahren gemäß einem der Ansprüche 2 bis 9 abgetrennt wird, und dieselbe nach erfolgter Entmetallisierung in eine neue Schmelz-Charge recycliert wird.

## Claims

1. A process for separation, for the purpose of disposal or recycling, of metallic phase from at least one non-metallic phase containing this, from the group consisting of the slag, salt slag, dross, residues and waste obtained during thermal metal extraction, production, working, processing and recycling, the phase mixture being subjected to radial acceleration, for demetallization, by rotation in a centrifuging device within a temperature range above the melting point or range of the metallic phase, characterized in that - in batchwise operation - the metal/non-metal phase mixture is introduced into a centrifuging mould with a temperature lying within the said temperature range, or is brought to the said temperature after introduction, and is subjected there, in a 1st process phase, to radial acceleration for a given time until a desired degree of demetallization is reached, while maintaining the temperature within the said range, and in that, in a 2nd process phase, at least the metallic phase which has been separated off, has emerged from the phase mixture and becomes located peripherally on the outside is caused to harden or solidify by lowering the temperature thereof, while maintaining the radial acceleration by rotation, after wich, on reaching the manipulation temperature, the metal phase is discharged as at least a body having an outer surface substantially corresponding to the shape of the inside of the centrifuging mould and a substantially rotary-paraboloidal or cylindrical inner surface.

2. A process according to claim 1, characterized in that the operation described in claim 1 is carried out with a first batch up to hardening or solidification of the metal phase which becomes located peripherally on the outside, and in that, with continuing rotation, at least a second batch of the phase mixture is introduced into the centrifuging mould with a temperature envisaged for the 1st process phase, and is subjected there to radial acceleration by rotation within the temperature range above the melting point of the metal phase, after which at least the metal body which becomes located within the hardened 1st batch and is adjacent to it is caused to harden or solidify, and finally the metal phase body formed, constructed with at least two layers, is discharged.

3. A process according to claim 1, characterized in that a first batch of the phase mixture is subjected to the 1st process phase, and in that, with continuing rotation, at least a second batch of the phase mixture is introduced into the centrifuging mould with a temperature envisaged for the 1st process phase, and is subjected there to radial acceleration by rotation within a temperature range above the melting point of the metal phase, after which solidification or hardening of the metal body constructed as one piece and finally discharge thereof take place.

4. A process according to one of claim 1 to 3, characterized in that a slag, salt slag or dross to be demetallized, from metal extraction, production or recycling, which has a metal content from the group consisting of aluminium and aluminium alloys is employed and a substantially tubular metal body is discharged.

5. A process according to one of claims 1 to 4, characterized in that the portion of demetallized non-metallic phase not adhering to the metal body is also discharged and portions thereof adhering to the metal body are separated mechanically therefrom, wherein, in that case where fluxes or salts are employed, these are recycled to new resmelting batches as a flux source.

6. A process according to one of claims 1 to 5, characterized in that the residual substances obtained after the centrifuging treatment are subjected to after-oxidation or after-combustion with air at elevated temperatures for conversion of metal residues and harmful metal compounds remaining therein.

7. A process according to one of claims 1 to 6, characterized in that the phase mixture to be separated is charged in the process phase with a radial acceleration which increases in a 1st stage and with a substantially constant radial acceleration in a 2nd stage of longer duration.

8. A process according to one of claims 1 to 7, characterized in that agents for influencing at least one of the physical properties of at least one of the phases, from the group consisting of consistency, viscosity, melting range, thixotropy and surface tension, are added or admixed, before or during the 1st process phase, to the phase mixture to be separated.

9. A process according to one of claims 1 to 8, characterized in that, in the phase mixture to be separated, the temperature of the metal phase is established, maintained and controlled before and/or during the 1st process phase by means of an inductive energy supply.

10. A device for carrying out the process according to one or claims 1 to 9, characterized by at least one centrifuging mould drum (1) which is optionally replaceable, is located in a housing or frame (8), can be set by means of an adjustable drive (6,7) in rotational movement of desired speed of rotation, is equipped with a conventional or inductive heating device and has an internal chamber (10,11,12) which has a cross-section or circular section which is symmetric around multiple axes or multiple radii at right angles to the rotational axis (a), the cross-sectional area enlarging or widening towards the discharge side (102).

11. A device according to claim 10, characterized in that the cross-section of the internal chamber (10,11,12) of the centrifuging mould drum (1) enlarges continuously with geometric similarity towards the discharge side (102).

12. A device according to one of claims 1 to 11, characterized in that at least the surfaces of the parts of the centrifuging mould (100) or drum (1) thereof which come into contact with the phase mixture to be separated are formed with a material, in the form of a coating (131, 141, 21) or exchangeable inserts, which substantially cannot be wetted by the individual phases at the phase separation temperature and/or does not react with these.

13. A device according to claim 12, characterized in that the said parts of the centrifuging mould (100) or of the drum (1) thereof are formed with cast iron, steel, graphite or a heat-stable oxide, carbide, nitride, silicide or boride of at least one of the elements from the group consisting of Mg, B, Al, Si and the metals of sub-groups 4 to 6 of the periodic table, cermet material, boron nitride, silicon carbide, aluminium oxide or magnesium oxide being particularly suitable.

14. A device according to one of claims 9 to 13, characterized in that the centrifuging mould (100) or drum (1) thereof is constructed with a rotational axis (a) of variable inclination.

15. A device according to one of claims 9 to 14, characterised in that the centrifuging mould (100) has devices for feeding a cooling medium and/or a purging or inert gas to or onto the drum (1) or into the internal chamber (10) thereof.

16. A device according to one of claims 9 to 15, characterized in that the internal chamber (10,11,12) of the centrifuging mould drum (1) is constructed with a preliminary chamber (11) of smaller cross-section which, in the direction at the discharge side, changes into an integrally adjacent main chamber (12) of larger cross-section set off therefrom stepwise.

17. The use of a centrifuging device, in particular according to one of claims 10 to 16, for separation, for the purpose of disposal or recycling, of a metallic phase from at least one non-metallic phase comprising this from the group consisting of the slag, salt slag, dross, residues and waste obtained during thermal metal extraction, production, working, processing and recycling, with the proviso that the metal/non-metal phase mixture is introduced into a centrifuging mould with a temperature lying within the said temperature range, or is brought to the said temperature after introduction, and is subjected there, in a 1st process phase, to radial acceleration for a given time until a desired degree of demetallisation is reached, while maintaining the temperature within the said range, and in that, in a 2nd process phase, at least the metallic phase which has been separated off, has emerged from the phase mixture and becomes located peripherally on the outside is caused to harden or solidify by lowering the temperature thereof, while maintaining the radial acceleration by rotation, after which, on reaching the manipulation temperature, the metal phase is discharged as at least a body having an outer surface substantially corresponding to the shape of the inside of the centrifuging mould and a substantially rotary-paraboloidal or cylindrical inner surface.

18. The use of a centrifuging device according to one of claims 10 to 16 for the purpose mentioned in claim 17, with the proviso that aluminium or an aluminium alloy is separated off from dross or slag comprising this by a process according to one of claims 2 to 9, and, after demetallization has taken place, this is recycled into a new smelting batch.

## Revendications

1. Procédé de séparation , permettant un traitement de récupération ou un recyclage, d'une phase métallique d'au moins une phase non métallique, la contenant, du groupe des scories, scories salines, crasses, résidus, et déchets produits lors de l'élaboration thermique de métal, de la production, de l'usinage , du traitement et du recyclage de métal, procédé par lequel le mélange de phases , pour la séparation de la phase métallique, est soumis, à l'intérieur d'une plage de température se trouvant au-dessus du point ou de la zone de fusion de la phase métallique, à une accélération radiale par rotation dans un dispositif centrifugeur, caractérisé par le fait que - à la faveur d' une conduite de l'exploitation par charges - le mélange de phases métallique/non métallique est introduit dans un moule centrifugeur à une température située à l'intérieur de la plage de température mentionnée, ou est porté à la température mentionnée après introduction, y est soumis dans une 1ère phase du procédé, à l'accélération radiale pendant un temps prédéterminé, avec maintien de la température à l'intérieur de la plage mentionnée, jusqu'à l'obtention du degré souhaité de séparation de la phase métallique, et que dans une 2ème phase du procédé, sous maintien de l'accélération radiale par rotation, au moins la phase métallique, extraite du mélange de phases et s'établissant à la périphérie extérieure, est amenée à durcissement ou à solidification par abaissement de sa température, après quoi la phase métallique, lors de l'obtention de la température de manipulation, est extraite en au moins un corps comportant essentiellement une surface externe correspondant à la configuration de la face interne du moule centrifugeur et une surface interne essentiellement en paraboloïde de révolution, ou cylindrique.

2. Procédé selon la revendication 1, caractérisé par le fait que le processus décrit dans la Revendication 1 est conduit avec une première charge jusqu'à durcissement ou solidification de la phase métallique s'établissant à la périphérie extérieure et que, tandis que la rotation est poursuivie, au moins une deuxième charge du mélange de phases est introduite dans le moule centrifugeur à une température prévue pour la 1ère phase du procédé, qu'elle est soumise par rotation à l'accélération radiale à l'intérieur de la plage de température se trouvant au-dessus du point de fusion de la phase métallique, après quoi par abaissement de température au moins le corps métallique s'établissant à l'intérieur de la 1ère charge solidifiée, adjacent à elle, est amené à durcissement ou solidification, et enfin le corps en phase métallique formé d'au moins deux couches est extrait.

3. Procédé selon la revendication 1, caractérisé par le fait qu'une première charge du mélange de phases est soumise à la 1ère étape du procédé et que, tandis que la rotation est poursuivie, au moins une deuxième charge du mélange de phases est introduite dans le moule centrifugeur à une température prévue pour la 1ère phase du procédé, y est soumis à l'accélération radiale par rotation à l'intérieur d'une plage de température se trouvant au-dessus du point de fusion de la phase métallique, après quoi se produit la solidification ou le durcissement du corps métallique formé d'une seule pièce, et enfin l'extraction de celui-ci.

4. Procédé selon l'une des revendications 1 à 3, caractérisé par le fait qu'est mise en place une scorie, scorie saline, ou crasse, dont le métal est à séparer, provenant de l'élaboration, de la production ou du recyclage de métal , avec une teneur en un métal du groupe de l'aluminium et des alliages d'aluminium et qu'un corps métallique essentiellement de forme tubulaire est extrait.

5. Procédé selon l'une des revendications 1 à 4, caractérisé par le fait que la portion de la phase non métallique séparée du métal, qui n'adhère pas au corps métallique, est également extraite et que les portions de celle-ci adhérant au corps métallique sont séparées mécaniquement de celui-ci, de sorte que dans le cas de la mise en oeuvre de fondants ou de sels, ceux-ci sont recyclés comme source de fondants pour de nouvelles charges de deuxième fusion .

6. Procédé selon l'une des revendications 1 à 5, caractérisé par le fait que les matières restantes obtenues après le traitement de centrifugation sont soumises à températures élevées, à une post-oxydation ou à une poscombustion avec de l'air pour la conversion des restes métalliques qui y sont demeurés et des composés métalliques nuisibles.

7. Procédé selon l'une des revendications 1 à 6, caractérisé par le fait que le mélange de phases à séparer dans la phase du procédé est soumis à une accélération radiale, croissante dans un 1er stade , et essentiellement constante pendant une durée plus longue dans un 2ème stade.

8. Procédé selon l'une des revendications 1 à 7, caractérisé par le fait qu'au mélange de phases devant être séparé sont ajoutés ou mélangés, avant ou pendant la 1ère phase du procédé, des agents pour influencer au moins une des propriétés physiques, d'au moins une des phases, du groupe comprenant la consistance, la viscosité, la plage de fusion, la thixotropie et la tension superficielle.

9. Procédé selon l'une des revendications 1 à 8, caractérisé par le fait que dans le mélange de phases devant être séparé la température de la phase métallique est réglée, maintenue ou commandée au moyen d'un apport d'énergie inductif, avant et/ou pendant la 1ère phase du procédé.

10. Dispositif pour la mise en oeuvre du procédé selon l'une des revendications 1 à 9, caractérisé par au moins un tambour-moule centrifugeur (1), le cas échéant interchangeable , disposé dans une cage ou bâti (8), déplaçable à une vitesse de rotation souhaitée en un mouvement de rotation, au moyen d'un entraînement réglable (6,7), équipé d'un dispositif de chauffage classique ou inductif, avec un volume intérieur (10,11,12) comportant une section transversale symétrique suivant plusieurs axes ou plusieurs rayons transversalement à l'axe de rotation (a), ou une section transversale circulaire, propre à être alimenté avec le mélange de phases, la surface de la section transversale étant formée de manière à s'agrandir ou s'élargir du côté de l'extraction (102).

11. Dispositif selon la revendication 10 , caractérisé par le fait que la section transversale du volume intérieur (10,11,12) du tambour-moule centrifugeur (1) est réalisée en s'agrandissant de manière continue vers le côté d'extraction(102)selon une similitude géométrique.

12. Dispositif selon l'une des revendications 1 à 11 , caractérisé par le fait qu'au moins les surfaces des parties du moule centrifugeur (100) ou celles du tambour (1), venant en contact avec le mélange de phases à séparer, sont constituées d'une des matières ne pouvant essentiellement pas être mouillées par les phases individuelles à la température de séparation de phases et/ou ne réagissant pas avec celles-ci, sous forme d'un revêtement (131,141,21) ou de garnitures échangeables.

13. Dispositif selon la revendication 12 , caractérisé par le fait que les parties qui y sont mentionnées du moule centrifugeur (100) ou du tambour (1) de celui-ci sont fabriquées avec de la fonte , de l'acier, du graphite ou un oxyde, carbure, niture, siliciure ou borure, résistant à la chaleur, d'au moins un des éléments du groupe Mg, B, Al, Si et des métaux des sous-groupes 4 à 6 de la Classification Périodique des Eléments, le matériau Cermet, le nitrure de bore, le carbure de silicium, l'oxyde d'aluminium ou l'oxyde de magnésium étant particulièrement appropriés.

14. Dispositif selon l'une des revendications 9 à 13 , caractérisé par le fait que le moule centrifugeur (100) ou le tambour (1) de celui-ci est réalisé avec un axe de rotation (a) d'inclinaison variable.

15. Dispositif selon l'une des revendications 9 à 14 , caractérisé par le fait que le moule centrifugeur (100) comporte des dispositifs pour l'amenée d'un fluide de refroidissement et/ou d'un gaz de lavage ou de protection au, ou sur le, tambour (1) ou dans le volume intérieur (10) de celui-ci.

16. Dispositif selon l'une des revendications 9 à 15 , caractérisé par le fait que le volume intérieur (10,11,12) du tambour-moule centrifugeur (1) est réalisé avec une préchambre (11) comportant une plus petite section transversale qui se convertit, en direction du côté d'extraction, en une chambre principale (12) présentant une plus grande section transversale, se raccordant entièrement, décalée d'elle en gradin.

17. Utilisation d'un dispositif centrifugeur, en particulier selon l'une des revendications 10 à 16, pour la séparation, permettant un traitement de récupération ou un recyclage, d'une phase métallique d'au moins une phase non métallique , la contenant, du groupe des scories, scories salines, crasses, résidus, et déchets produits lors de l'élaboration thermique de métal, de la production, de l'usinage , du traitement et du recyclage de métal, avec la mesure selon laquelle le mélange de phases métallique/non métallique est introduit dans un moule centrifugeur à une température située à l'intérieur de la plage de température mentionnée , ou est porté à la température mentionnée après introduction , y est soumis dans une phase de procédé, avec maintien de la température à l'intérieur de la plage mentionnée, à l'accélération radiale pendant un temps prédéterminé, jusqu'à l'obtention du degré souhaité de séparation de la phase métallique, et que dans une 2 ème phase du procédé, sous maintien de l'accélération radiale par rotation, au moins la phase métallique, extraite du mélange de phases et s'établissant à la périphérie extérieure, est amenée à durcissement ou à solidification par abaissement de sa température, après quoi la phase métallique, lors de l'obtention de la température de manipulation, est extraite en au moins un corps comportant essentiellement une surface externe correspondant à la configuration de la face interne du moule centrifugeur, et une surface interne essentiellement en paraboloïde de révolution ou cylindrique.

18. Utilisation d'un dispositif centrifugeur selon l'une des revendications 10 à 16 dans le but mentionné dans la revendication 17, avec la mesure selon laquelle l'aluminium ou un alliage d'aluminium est séparé des crasses ou scories le contenant selon un procédé conforme à l'une des revendications 2 à 9, et celui-ci est recyclé dans une nouvelle charge de fusion après obtention de la séparation de la phase métallique.
